# EUROPEAN PATENT SPECIFICATION

(11) **EP 2 860 920 B1**
(45) Date of publication and mention of the grant of the patent: **16.08.2017**
(21) Application number: 13851248.8
(22) Date of filing: 10.10.2013
(51) Int. Cl.: H04L 12/723, H04L 12/741, H04L 12/715, H04L 12/751, H04L 12/717

(54) **METHOD AND DEVICE FOR GENERATING FORWARDING TABLE**
VERFAHREN UND VORRICHTUNG ZUR ERZEUGUNG VON WEITERLEITUNGSTABELLEN
PROCÉDÉ ET DISPOSITIF POUR GÉNÉRER UNE TABLE D'ACHEMINEMENT

(30) Priority: 01.11.2012 CN 201210430787
(43) Date of publication of application: 15.04.2015
(73) Proprietor: ZTE Corporation, Shenzhen, Guangdong 518057 (CN)
(72) Inventor: JIN, Lizhong, Shenzhen Guangdong 518057 (CN)
(74) Representative: HGF Limited
(86) International application number: PCT/CN2013/084960
(87) International publication number: WO 2014/067384

(56) References cited:
- CN-A- 102 377 578
- CN-A- 102 413 060
- CN-A- 102 624 615
- FANG HAO ET AL: "Secure Cloud Computing with a Virtualized Network Infrastructure", USENIX,, 27 May 2010 (2010-05-27), pages 1-7, XP061009962, [retrieved on 2010-05-27]

## Description

### Technical Field

The present invention relates to the field of communications, and in particular, to a method and apparatus for generating a forwarding table.

### Background of the Related Art

In the current network communication devices, in architecture in which a forwarding plane and a control plane are independent, there are three commonly used methods for generating a forwarding table.

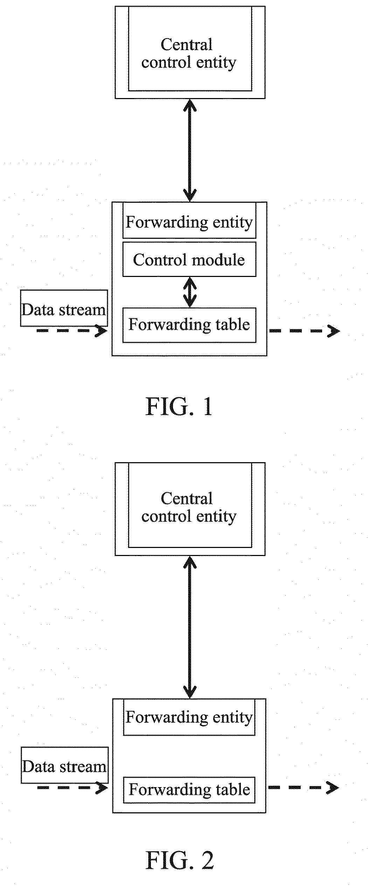

In a first mode, as shown in Fig. 1, when receiving a data message, a forwarding entity searches a forwarding table according to a destination address, and if corresponding forwarding entries are found, forwards the message; and if corresponding forwarding entries are not found, reports the message to a control entity, and the control entity generates or searches a forwarding table, and at the same time transmits the generated or found forwarding table to the forwarding entity to be used by the forwarding entity in forwarding a next message.

In a second mode, as shown in Fig. 1, the control entity transmits all forwarding tables generated by it to the forwarding entity, and when the forwarding entity receives a data message, searches a forwarding table according to a destination address, and if corresponding forwarding entries are found, forwards the message; and if corresponding forwarding entries are not found, discards the message or performs broadcast process on the message.

In a third mode, as shown in Fig. 2, when receiving a data message, the forwarding entity searches a forwarding table according to a destination address, and if corresponding forwarding entries are found, forwards the message; and if corresponding forwarding entries are not found, reports the message to a local control module of the forwarding entity, and the local control module searches the forwarding table and at the same time transmits the found forwarding table to the forwarding entity to be used by the forwarding entity in forwarding a next message. If corresponding forwarding entries are not found by the control module, the control module reports the message to a control entity, and the control entity generates or searches a forwarding table, and at the same time transmits the generated or found forwarding table to the forwarding entity to be used by the forwarding entity in forwarding a next message.

In all the above modes, the forwarding entries generated for data messages with different destination addresses are independent of each other, and have no any correlation. In such case, it needs to issue each forwarding entry to the forwarding entity through an independent query, which significantly increases the pressure on the information interaction between the control entity and the forwarding entity.

In the non-patent document FANG HAO ET AL: "Secure Cloud Computing with a Virtualized Network Infrastructure", USENIX 27 May 2010 (2010-05-27), pages 1-7, XP061009962, it provides an architecture that takes advantage of network virtualization and centralized controller. This architecture overcomes scalability limitations of prior solutions based on VLANs, and enables users to customize security policy settings the same way they control their on-site network.

### Summary of the Invention

The technical problem to be solved by the present invention is to provide a method and apparatus for generating a forwarding table, which can reduce the times of the forwarding entity querying forwarding entries from the control entity, and reduce the processing pressure on the control entity.

In order to solve the above technical problem, a method for generating a forwarding table according to the present invention comprises:
a control entity generating forwarding entries and setting the forwarding entries having an association attribute in the same associated forwarding entry group; and
when a forwarding entity queries forwarding entries, after corresponding forwarding entries are found, the control entity further judging whether the found forwarding entries belong to an associated forwarding entry group, and if yes, the control entity transmitting to the forwarding entity which queries the forwarding entries all the forwarding entries in the associated forwarding entry group which the found forwarding entries belong to.

Preferably, setting the forwarding entries having an association attribute in the same associated forwarding entry group comprises:
the control entity setting the forwarding entries of hosts belonging to the same server cluster in the same associated forwarding entry group, or setting the forwarding entries of hosts running associated services in the same associated forwarding entry group.

Preferably, the method further comprises:
after setting the forwarding entries having an association attribute in the same associated forwarding entry group, the control entity allocating a correlation group identity to the associated forwarding entry group, setting a correlation group identity corresponding to forwarding entries not belonging to the associated forwarding entry group as null or not setting a correlation group identity for the forwarding entries not belonging to the associated forwarding entry group; and
the control entity judging whether the found forwarding entries belong to an associated forwarding entry group comprises: judging whether the correlation group identity corresponding to the found forwarding entries is null or whether there is no correlation group identity, and if no, determining that the found forwarding entries belong to an associated forwarding entry group.

Preferably, the control entity generating forwarding entries comprises:
the control entity receiving an address of the forwarding entity and addresses of hosts connected to the forwarding entity that are transmitted by the forwarding entity connected thereto, and generating forwarding entries of the hosts with the address of the forwarding entity and the addresses of the hosts connected to the forwarding entity.

Preferably, the forwarding entity querying the forwarding entries comprises:
when receiving a data message or a head of a data message transmitted by the forwarding entity, the control entity determining that the forwarding entity querying forwarding entries corresponding to a destination address of the data message.

Preferably, the method further comprises:
when judging that the found forwarding entries do not belong to an associated forwarding entry group, the control entity transmitting the found forwarding entries to the forwarding entity which queries the forwarding entries.

An apparatus for generating a forwarding table comprises: an entry generation unit, a group setting unit and a query unit, wherein:
the entry generation unit is configured to generate forwarding entries;
the group setting unit is configured to set the forwarding entries having an association attribute in the same associated forwarding entry group; and
the query unit is configured to, when a forwarding entity queries forwarding entries, after corresponding forwarding entries are found, further judge whether the found forwarding entries belong to an associated forwarding entry group, and if yes, transmit to the forwarding entity which queries the forwarding entries all the forwarding entries in the associated forwarding entry group which the found forwarding entries belong to.

Preferably, the group setting unit is configured to set the forwarding entries of hosts belonging to the same server cluster in the same associated forwarding entry group, or set the forwarding entries of hosts running associated services in the same associated forwarding entry group.

Preferably, the group setting unit is further configured to, after setting the forwarding entries having an association attribute in the same associated forwarding entry group, allocate a correlation group identity to the associated forwarding entry group, and set a correlation group identity corresponding to forwarding entries not belonging to the associated forwarding entry group as null or not set a correlation group identity for the forwarding entries not belonging to the associated forwarding entry group; and
the query unit is configured to judge whether the correlation group identity corresponding to the found forwarding entries is null or whether there is no correlation group identity, and if no, determine that the found forwarding entries belong to an associated forwarding entry group.

Preferably, the entry generation unit is configured to receive an address of the forwarding entity and addresses of hosts connected to the forwarding entity that are transmitted by the forwarding entity connected thereto, and generate forwarding entries of the hosts with the address of the forwarding entity and the addresses of the hosts connected to the forwarding entity.

In conclusion, the embodiments of the present invention also forward the other forwarding entries of the associated forwarding entry group to the forwarding entity correspondingly, when one forwarding entry of the same associated forwarding entry group is forwarded to the forwarding entity. With this method, the times of the forwarding entity transmitting the data message to the control entity, generating a forwarding table or searching the forwarding table is reduced efficiently, and the processing pressure of generating a forwarding table on the control entity is reduced.

### Brief Description of Drawings

Fig. 1 is a diagram of interaction between a control entity and a forwarding entity in the prior art;
Fig. 2 is a diagram of interaction between a control entity and a forwarding entity with a control module in the prior art;
Fig. 3 is a diagram of architecture of a layer 2 virtual overlay network according to the present embodiment;
Fig. 4 is a diagram of architecture of a layer 3 virtual overlay network according to the present embodiment; and
Fig. 5 is a diagram of architecture of an apparatus for generating a forwarding table according to the present embodiment.

### Preferred Embodiments of the Present Invention

In the present embodiment, in consideration of data messages with different addresses being associated in an actual data center network, there is a case that according to forwarding entries generated for a data message transmitted to a destination A, it can be predicted that a data message transmitted to a destination B is upcoming, and corresponding forwarding entries will be generated. Two hosts at the destination A and the destination B have association, which is reflected in the following several aspects:
(1) In a case that the host A and the host B belong to the same server cluster, the host A and the host B are strongly associated.
(2) Services run on the host A and the host B are associated, for example, an Email server and an Email storage server are associated.

A control entity sets forwarding entries of hosts belonging to the same server cluster in the same associated forwarding entry group, or sets forwarding entries of hosts running associated services in the same associated forwarding entry group.

The present embodiment provides a method for generating a forwarding table based on association, which also forwards the other forwarding entries of the associated forwarding entry group to the forwarding entity correspondingly, when one forwarding entry of the same associated forwarding entry group is forwarded to the forwarding entity. With this method, the times of the forwarding entity transmitting the data message to the control entity, generating a forwarding table or searching the forwarding table can be reduced efficiently, and the processing pressure of generating a forwarding table on the control entity is reduced.

The present embodiment provides a method for generating a forwarding table based on association, comprising:
a control entity setting the forwarding entries having an association attribute in the same associated forwarding entry group and allocating a Correlation Group ID (CGID for short), wherein entries of the forwarding table at least include destination addresses and output interfaces of forwarding entities;
after receiving a data message of a user, searching forwarding table, when no matching forwarding entries are found, a forwarding entity transmitting the data message to the control entity;
after receiving the data message, the control entity searching for a corresponding forwarding entries and checking a CGID corresponding to the forwarding entries; the control entity issuing all forwarding entries corresponding to the CGID to the forwarding entity;
the forwarding entity generating a forwarding table according to all received forwarding entries corresponding to the CGID, to be searched when a data message is forwarded;
the forwarding entity forwarding the received data message to an output interface according to the newly generated forwarding table.

The present invention will be described in detail below in conjunction with accompanying drawings and embodiments.

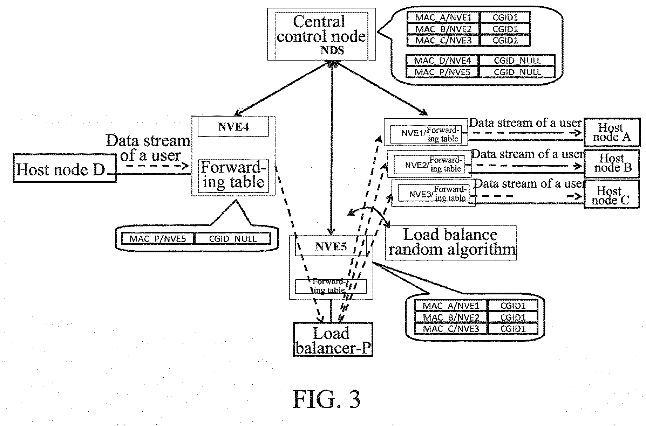

Fig. 3 is a diagram of a layer 2 virtual overlay network according to an embodiment of the present invention. In the virtual overlay network, the forwarding entity is a Network Virtualization Edge (NVE for short), and the control entity is a Network Overlay Directory Server (NDS for short). NVE1-NVE 4 are connected to a physical host or a virtual machine, and NVE5 is connected to a load balancer_P with a load balance function to constitute a host A, a host B and a host C into a sever cluster.

The method for generating a forwarding table according to the present embodiment includes:
In step 1: NVE1-NVE 5 learn MAC addresses of connected physical hosts or virtual machines through an Address Resolution Protocol (ARP) or other protocols, and transmits the MAC addresses and the addresses of the NVEs to an NDS.

In step 2: after receiving information transmitted in step 1, the NDS (control entity) generates forwarding entries, which include at least two parts: destination MAC addresses and tunnel encapsulation information including destination addresses of NVEs.

In step 3: the NDS sets forwarding entries constituted by MAC addresses corresponding to hosts having an association attribute in the same associated forwarding entry group, and allocates a Correlation Group ID (CGID for short) with a value of CGID1 to the group.

These hosts having an association attribute belong to the same load balance server cluster. For independent forwarding entries having no association attribute, the CGID is null, which is represented by CGID_NULL or the CGID will not be set.

In step 4: the NVE4 receives a data message from an interface connected to a host/virtual machine, and searches a forwarding table, and if forwarding entries corresponding to a destination address MAC_P of the data message is found, forwards the data message to the NVE5 through an IP tunnel and turns to step 6; and if no matching forwarding entries are found, transmits the data message or head information of the data message to the control entity NDS, wherein the header information at least includes a source MAC address, a destination MAC address and a message type (Ethernet message type) and performs the next step.

In step 5: after receiving the data message, the control entity NDS searches a forwarding table on the control entity NDS, and after corresponding forwarding entries MAC_P are found, checks the CGID corresponding to the forwarding entries at the same time, and the specific CGID is a CGID_NULL value which represents that there is no correlated forwarding entries, the control entity NDS issues the forwarding entries MAC_P to the forwarding entity NVE4, and then turns to the step of searching the forwarding table in step 4.

In step 6: the NVE5 receives the data message from the NVE4, searches a forwarding table, and transmits the data message to a local load balancer, and the load balancer needs to uniformly allocate the data message to the hosts MAC_A, MAC_B and MAC_C according to a load balance algorithm, and then determines to firstly transmit the data message with a destination address of MAC_P to the MAC_A.

As the load balancer allocates the data message to the hosts MAC_A, MAC_B and MAC_C, it needs to firstly transmit the data message to the load balancer. As the NVE5 and the load balancer are two devices, the NVE5 can transmit the data message to the load balancer only by searching a forwarding table.

In step 7: the load balancer amends the destination address of the data message to MAC_A, and transmits the data message to the NVE5.

In step 8: after receiving the data message with a destination address of MAC_A, if corresponding forwarding entries MAC_A are found, the NVE5 forwards the data message to the NVE1 through the IP tunnel, and the forwarding process ends; and if no matching forwarding entries are found, the NVE5 transmits the data message or header information of the data message to the control entity NDS, wherein, the header information at least includes a source MAC address, a destination MAC address and a message type, and the next step 9 will be performed.

In step 9: after receiving the data message, the control entity NDS searches a forwarding table on a control entity NDS, and after corresponding forwarding entries MAC_A are found, checks a CGID corresponding to the forwarding entries at the same time, and the specific CGID is a CGID1 value which represents that there are forwarding entries having an association attribute, the control entity NDS issues all forwarding entries MAC_A, MAC_B and MAC_C having an association attribute to the forwarding entity NVE5.

In step 10: the forwarding entity NVE5 issues all received forwarding entries with the same CGID, i.e., MAC_A, MAC_B and MAC_C to the forwarding table, to be searched when a data message is forwarded.

In step 11: the forwarding entity NVE5 searches a forwarding table for the data message with a destination address of MAC_A received in step 8 according to newly generated forwarding entries MAC_A, MAC_B and MAC_C, acquires tunnel encapsulation addresses corresponding to the data message, and forwards the data message to the NVE1. At this time, a forwarding process of one message ends.

A load balancer connected to the NVE5 judges that a next message arriving at a destination of MAC_P will be forwarded to MAC_B according to a load balance algorithm. At this time, the NVE5 has forwarding entries arriving at MAC_B, and therefore can directly forwards the data message to the NVE2 connected to the MAC_B. It can be seen from the above that the NVE5 generates the forwarding entries of MAC_B and MAC_C in advance, which can reduce times of enquiring the NDS, and improves the forwarding efficiency.

The central control entity NDS can perform collective operations on the forwarding entries in the CGID by transmitting a forwarding entry operation message with the CGID to the forwarding entity NVE. If the control entity NDS needs to cancel all forwarding entries belonging to the same CGID, it only needs to transmit a forwarding entry cancel message with the CGID to the forwarding entity NVE, without cancelling each forwarding entry one by one.

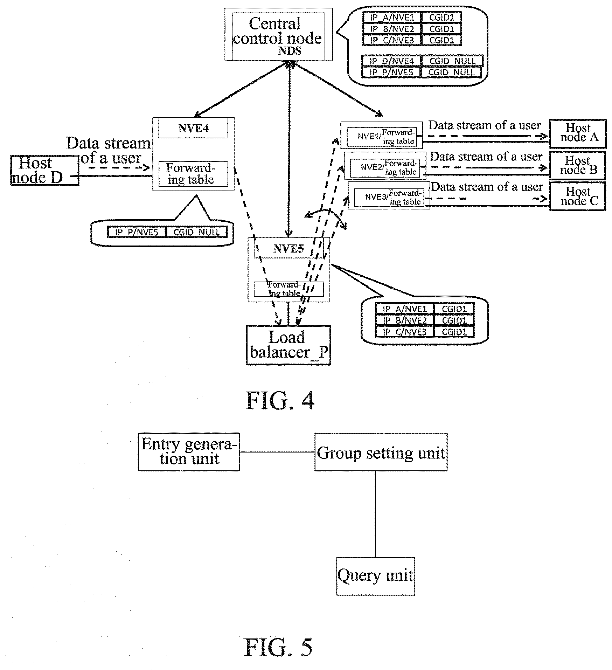

Fig. 4 is a diagram of a layer 3 virtual overlay network according to the present embodiment. In the virtual overlay network, the forwarding entity is a Network Virtualization Edge (NVE for short), and the control entity is a Network Overlay Directory Server (NDS for short). NVE1-NVE4 are connected to a physical host or a virtual machine, and NVE5 is connected to a load balancer_P with a load balance function to constitute a host A, a host B and a host C into a sever cluster.

The method for generating a forwarding table according to the present embodiment includes:
In step a: NVE1-NVE5 learn IP addresses of connected physical hosts or virtual machines through an ARP or other protocols, and transmits the IP address information and the addresses of the NVEs to an NDS.

In step b: after receiving information transmitted in step a, the NDS generates forwarding entries, which include at least two parts: destination IP addresses and tunnel encapsulation information including destination addresses of NVEs.

In step c: the NDS sets forwarding entries constituted by IP addresses corresponding to hosts having an association attribute in the same associated forwarding entry group, and allocates a Correlation Group ID (CGID for short) with a value of CGID1 to the group.

These hosts having an association attribute belong to the same load balance server cluster. For independent forwarding entries having no association attribute, the CGID is null, which is represented by CGID_NULL or the CGID will not be set.

In step d: the NVE4 receives a data message from an interface connected to a host/virtual machine, and searches a forwarding table, and if forwarding entries corresponding to a destination address IP_P of the data message is found, forwards the data message to the NVE5 through an IP tunnel and turns to step f; and if no matching forwarding entries are found, transmits the data message or head information of the data message to the control entity NDS, wherein the header information at least includes a source IP address, a destination IP address and a message type (IP message type) and performs the next step.

In step e: after receiving the data message, the control entity NDS searches a forwarding table on the control entity NDS, and after corresponding forwarding entries IP_P are found, checks the CGID corresponding to the forwarding entries at the same time, and the specific CGID is a CGID_NULL value which represents that there is no correlated forwarding entries, the control entity NDS issues the forwarding entries IP_P to the forwarding entity NVE4, and then turns to the step of searching the forwarding table in step d.

In step f: the NVE5 receives the data message from the NVE4, searches a forwarding table, and transmits the data message to a local load balancer, and the load balancer needs to uniformly allocate the data message to the hosts IP_A, IP_B and IP_C according to a load balance algorithm, and then determines to firstly transmit the data message with a destination address of IP_P to the IP_A.

In step g: the load balancer amends the destination address of the data message to IP_A, and transmits the data message to the NVE5.

In step h: after receiving the data message with a destination address of IP_A, if corresponding forwarding entries IP_A are found, the NVE5 forwards the data message to the NVE1 through the IP tunnel, and the forwarding process ends; and if no matching forwarding entries are found, the NVE5 transmits the data message or header information of the data message to the control entity NDS, wherein, the header information at least includes a source IP address, a destination IP address and a message type, and the next step i will be performed.

In step i: after receiving the data message, the control entity NDS searches a forwarding table on a control entity NDS, and after corresponding forwarding entries IP_A are found, checks a CGID corresponding to the forwarding entries at the same time, and the specific CGID is a CGID1 value which represents that there are forwarding entries having an association attribute, the control entity NDS issues all forwarding entries IP_A, IP_B and IP_C having an association attribute to the forwarding entity NVE5.

In step j: the forwarding entity NVE5 issues all received forwarding entries with the same CGID, i.e., IP_A, IP_B and IP_C to the forwarding table, to be searched when a data message is forwarded.

In step k: the forwarding entity NVE5 searches a forwarding table for the data message with a destination address of IP_A received in step h according to newly generated forwarding tables IP_A, IP_B and IP_C, acquires tunnel encapsulation addresses corresponding to the data message, and forwards the received message to the NVE1. At this time, a forwarding process of one message ends.

A load balancer connected to the NVE5 judges that a next message arriving at a destination of IP_P will be forwarded to IP_B according to a load balance algorithm. At this time, the NVE5 has forwarding entries arriving at IP_B, and therefore can directly forwards the data message to the NVE2 connected to the IP_B. It can be seen from the above that the NVE5 generates the forwarding entries of IP_B and IP_C in advance, which can reduce times of enquiring the NDS, and improves the forwarding efficiency.

The central control entity NDS can perform collective operations on the entries of the forwarding table in the CGID by transmitting a forwarding table entry operation message with the CGID to the forwarding entity NVE. If the control entity NDS needs to cancel all forwarding entries belonging to the same CGID, it only needs to transmit a forwarding entry cancel message with the CGID to the forwarding entity NVE, without cancelling each forwarding entry one by one.

As shown in Fig. 5, the present embodiment further provides an apparatus for generating a forwarding table, including an entry generation unit, a group setting unit and a query unit, wherein:
the entry generation unit is configured to generate forwarding entries;
the group setting unit is used to set the forwarding entries having an association attribute in the same associated forwarding entry group; and
the query unit is used to further judge whether the found forwarding entries belong to the associated forwarding entry group after finding the corresponding forwarding entries when a forwarding entity queries the forwarding entries, and if yes, transmit to the forwarding entity which queries the forwarding entries all the forwarding entries of the associated forwarding entry group which the found forwarding entries belonged to.
the group setting unit is specifically used to set the forwarding entries of hosts belonging to the same server cluster in the same associated forwarding entry group, or set the forwarding entries of hosts running associated services in the same associated forwarding entry group.
the group setting unit is further used to allocate a correlation group identity to the associated forwarding entry group, set correlation group identities corresponding to forwarding entries not belonging to the associated forwarding entry group as null or not set correlation group identities for the forwarding entries not belonging to the associated forwarding entry group after setting the forwarding entries having an association attribute in the same associated forwarding entry group; and
the query unit is used to judge whether the correlation group identities corresponding to the found forwarding entries are null or whether there is no correlation group identities, and if no, determine that the found forwarding entries belong to the associated forwarding entry group.
the entry generation unit is used to receive an address of the forwarding entity transmitted by the forwarding entity connected thereto and addresses of hosts connected to the forwarding entity, and generate forwarding entries of the hosts according to the address of the forwarding entity and the addresses of the hosts connected to the forwarding entity.

Obviously, those skilled in the art should understand that each module or each step of the aforementioned present invention can be implemented with general computing devices, and can be integrated in a single computing device, or distributed onto a network consisting of a plurality of computing devices; alternatively, they can be implemented with program codes executable by the computing devices, and therefore, they can be stored in storage devices to be executed by the computing devices; alternatively, they are respectively made into a plurality of integrated circuit modules; alternatively, it is implemented with making several modules or steps of them into a single integrated circuit module. Thus, the present invention is not limited to any specific combinations of hardware and software.

The above description is only the preferred embodiments of the present invention and is not intended to limit the present invention. The invention can have a variety of changes and variations for those skilled in the art. Any modification, equivalent substitution, improvement etc. which are made within the technical scope of the present invention should belong to the protection scope of the present invention as defined by the scope of the claims.

### Industrial Applicability

The embodiments of the present invention also forward the other forwarding entries of the associated forwarding entry group to the forwarding entity correspondingly, when one forwarding entry of the same associated forwarding entry group is forwarded to the forwarding entity. With this method, the times of the forwarding entity transmitting the data message to the control entity, generating a forwarding table or searching the forwarding table can be reduced efficiently, and the processing pressure of generating a forwarding table on the control entity is reduced.

## Claims

1. A method for generating a forwarding table, comprising:
a control entity generating forwarding entries and setting the forwarding entries having an association attribute in the same associated forwarding entry group;
**characterized by**,
when a forwarding entity queries forwarding entries, after corresponding forwarding entries are found, the control entity further judging whether the found forwarding entries belong to an associated forwarding entry group, and if yes, the control entity transmitting to the forwarding entity which queries the forwarding entries all the forwarding entries in the associated forwarding entry group which the found forwarding entries belong to;
wherein, setting the forwarding entries having an association attribute in the same associated forwarding entry group comprises:
the control entity setting the forwarding entries of hosts belonging to the same server cluster in the same associated forwarding entry group, or setting the forwarding entries of hosts running associated services in the same associated forwarding entry group.

2. The method according to claim 1, further comprising:
after setting the forwarding entries having an association attribute in the same associated forwarding entry group, the control entity allocating a correlation group identity to the associated forwarding entry group, setting a correlation group identity corresponding to forwarding entries not belonging to the associated forwarding entry group as null or not setting a correlation group identity for the forwarding entries not belonging to the associated forwarding entry group; and
the control entity judging whether the found forwarding entries belong to an associated forwarding entry group comprises: judging whether the correlation group identity corresponding to the found forwarding entries is null or whether there is no correlation group identity, and if no, determining that the found forwarding entries belong to an associated forwarding entry group.

3. The method according to claim 1, wherein, the control entity generating forwarding entries comprises:
the control entity receiving an address of the forwarding entity and addresses of hosts connected to the forwarding entity that are transmitted by the forwarding entity connected thereto, and generating forwarding entries of the hosts with the address of the forwarding entity and the addresses of the hosts connected to the forwarding entity.

4. The method according to claim 1, wherein, the forwarding entity querying the forwarding entries comprises:
when receiving a data message or a head of a data message transmitted by the forwarding entity, the control entity determining that the forwarding entity querying forwarding entries corresponding to a destination address of the data message.

5. The method according to claim 1, further comprising:
when judging that the found forwarding entries do not belong to an associated forwarding entry group, the control entity transmitting the found forwarding entries to the forwarding entity which queries the forwarding entries.

6. An apparatus for generating a forwarding table, comprising: an entry generation unit, a group setting unit and a query unit, wherein:
the entry generation unit is configured to generate forwarding entries;
the group setting unit is configured to set the forwarding entries having an association attribute in the same associated forwarding entry group;
**characterized in that**,
the query unit is configured to, when a forwarding entity queries forwarding entries, after corresponding forwarding entries are found, further judge whether the found forwarding entries belong to an associated forwarding entry group, and if yes, transmit to the forwarding entity which queries the forwarding entries all the forwarding entries in the associated forwarding entry group which the found forwarding entries belong to;
wherein,
the group setting unit is configured to set the forwarding entries of hosts belonging to the same server cluster in the same associated forwarding entry group, or set the forwarding entries of hosts running associated services in the same associated forwarding entry group.

7. The apparatus according to claim 6, wherein,
the group setting unit is further configured to, after setting the forwarding entries having an association attribute in the same associated forwarding entry group, allocate a correlation group identity to the associated forwarding entry group, and set a correlation group identity corresponding to forwarding entries not belonging to the associated forwarding entry group as null or not set a correlation group identity for the forwarding entries not belonging to the associated forwarding entry group; and
the query unit is configured to judge whether the correlation group identity corresponding to the found forwarding entries is null or whether there is no correlation group identity, and if no, determine that the found forwarding entries belong to an associated forwarding entry group.

8. The apparatus according to claim 6, wherein,
the entry generation unit is configured to receive an address of the forwarding entity and addresses of hosts connected to the forwarding entity that are transmitted by the forwarding entity connected thereto, and generate forwarding entries of the hosts with the address of the forwarding entity and the addresses of the hosts connected to the forwarding entity.

## Patentansprüche

1. Verfahren zum Erzeugen einer Weiterleitungstabelle, umfassend:
eine Kontrollentität, die Weiterleitungseinträge erzeugt und die Weiterleitungseinträge festlegt, die ein Assoziierungsattribut in derselben assoziierten Weiterleitungseintrag-Gruppe haben;
**gekennzeichnet dadurch, dass**
wenn eine Weiterleitungsentität Weiterleitungseinträge abfragt, nachdem entsprechende Weiterleitungseinträge gefunden werden, die Kontrollentität ferner beurteilt, ob die gefundenen Weiterleitungseinträge zu einer assoziierten Weiterleitungseintrag-Gruppe gehören, und wenn ja, die Kontrollentität an die Weiterleitungsentität, die die Weiterleitungseinträge abfragt, alle Weiterleitungseinträge in der assoziierten Weiterleitungseintrag-Gruppe überträgt, zu der die gefundenen Weiterleitungseinträge gehören;
wobei ein Festlegen der Weiterleitungseinträge, die ein Assoziierungsattribut in derselben assoziierten Weiterleitungseintrag-Gruppe haben, umfasst:
dass die Kontrollentität die Weiterleitungseinträge von Hosts festlegt, die zum selben Servercluster in derselben assoziierten Weiterleitungseintrag-Gruppe gehören, oder die Weiterleitungseinträge von Hosts festlegt, die assoziierte Dienste in derselben assoziierten Weiterleitungseintrag-Gruppe ausführen.

2. Verfahren nach Anspruch 1, ferner umfassend:
dass nach Festlegen der Weiterleitungseinträge, die ein Assoziierungsattribut in derselben assoziierten Weiterleitungseintrag-Gruppe haben, die Kontrollentität der assoziierten Weiterleitungseintrag-Gruppe eine Korrelationsgruppen-Identität zuweist, eine Korrelationsgruppen-Identität entsprechend der Weiterleitungseinträge, die nicht zu der assoziierten Weiterleitungseintrag-Gruppe gehören, als null festlegt oder keine Korrelationsgruppen-Identität für die Weiterleitungseinträge, die nicht zu der assoziierten Weiterleitungseintrag-Gruppe gehören, festlegt; und
das Beurteilen durch die Kontrollentität, ob die gefundenen Weiterleitungseinträge zu einer assoziierten Weiterleitungseintrag-Gruppe gehören, umfasst: Beurteilen, ob die Korrelationsgruppen-Identität entsprechend der gefundenen Weiterleitungseinträge null ist oder ob es keine Korrelationsgruppen-Identität gibt, und wenn nicht, Bestimmen, dass die gefundenen Weiterleitungseinträge zu einer assoziierten Weiterleitungseintrag-Gruppe gehören.

3. Verfahren nach Anspruch 1, wobei die Kontrollentität, die Weiterleitungseinträge erzeugt, umfasst:
Erhalten durch die Kontrollentität von einer Adresse der Weiterleitungsentität und Adressen von Hosts, die mit der Weiterleitungsentität verbunden sind, die von der damit verbundenen Weiterleitungsentität übertragen werden, und Erzeugen von Weiterleitungseinträgen der Hosts mit der Adresse der Weiterleitungsentität und den Adressen der Hosts, die mit der Weiterleitungsentität verbunden sind.

4. Verfahren nach Anspruch 1, wobei die Weiterleitungsentität, die die Weiterleitungseinträge abfragt, umfasst:
bei Erhalten einer Datennachricht oder eines Kopfs einer Datennachricht, die von der Weiterleitungsentität übertragen wird, Bestimmen durch die Kontrollentität, dass die Weiterleitungsentität, die Weiterleitungseinträge abfragt, einer Zieladresse der Datennachricht entspricht.

5. Verfahren nach Anspruch 1, ferner umfassend:
bei Beurteilung, dass die gefundenen Weiterleitungseinträge nicht zu einer assoziierten Weiterleitungseintrag-Gruppe gehören, Übertragen durch die Kontrollentität der gefundenen Weiterleitungseinträge an die Weiterleitungsentität, die die Weiterleitungseinträge abfragt.

6. Vorrichtung zum Erzeugen einer Weiterleitungstabelle, umfassend: eine Eintrag-Erzeugungseinheit, eine Gruppenfestlegungseinheit und eine Abfrageeinheit, wobei:
die Eintrag-Erzeugungseinheit konfiguriert ist, um Weiterleitungseinträge zu erzeugen;
die Gruppenfestlegungseinheit konfiguriert ist, um die Weiterleitungseinträge festzulegen, die ein Assoziierungsattribut in derselben assoziierten Weiterleitungseintrag-Gruppe haben;
**dadurch gekennzeichnet, dass**
die Abfrageeinheit konfiguriert ist, um, wenn eine Weiterleitungsentität Weiterleitungseinträge abfragt, nachdem entsprechende Weiterleitungseinträge gefunden werden, ferner zu beurteilen, ob die gefundenen Weiterleitungseinträge zu einer assoziierten Weiterleitungseintrag-Gruppe gehören, und wenn ja, an die Weiterleitungsentität, die die Weiterleitungseinträge abfragt, alle Weiterleitungseinträge in der assoziierten Weiterleitungseintrag-Gruppe zu übertragen, zu der die gefundenen Weiterleitungseinträge gehören;
wobei
die Gruppenfestlegungseinheit um die Weiterleitungseinträge von Hosts festzulegen, die zum selben Servercluster in derselben assoziierten Weiterleitungseintrag-Gruppe gehören, oder die Weiterleitungseinträge von Hosts festzulegen, die assoziierte Dienste in derselben assoziierten Weiterleitungseintrag-Gruppe ausführen.

7. Vorrichtung nach Anspruch 6, wobei
die Gruppenfestlegungseinheit ferner konfiguriert ist, um nach Festlegen der Weiterleitungseinträge, die ein Assoziierungsattribut in derselben assoziierten Weiterleitungseintrag-Gruppe haben, eine Korrelationsgruppen-Identität zu der assoziierten Weiterleitungseintrag-Gruppe zuzuweisen, und eine Korrelationsgruppen-Identität entsprechend der Weiterleitungseinträge, die nicht zu der assoziierten Weiterleitungseintrag-Gruppe gehören, als null festzulegen oder keine Korrelationsgruppen-Identität für die Weiterleitungseinträge, die nicht zu der assoziierten Weiterleitungseintrag-Gruppe gehören, festzulegen; und
die Abfrageeinheit konfiguriert ist, um zu beurteilen, ob die Korrelationsgruppen-Identität entsprechend der gefundenen Weiterleitungseinträge null ist oder ob es keine Korrelationsgruppen-Identität gibt, und wenn nicht, Bestimmen, dass die gefundenen Weiterleitungseinträge zu einer assoziierten Weiterleitungseintrag-Gruppe gehören.

8. Vorrichtung nach Anspruch 6, wobei
die Eintrag-Erzeugungseinheit konfiguriert ist, um eine Adresse der Weiterleitungsentität und Adressen von Hosts zu erhalten, die mit der Weiterleitungsentität verbunden sind, die von der damit verbundenen Weiterleitungsentität übertragen werden, und Weiterleitungseinträge der Hosts mit der Adresse der Weiterleitungsentität und den Adressen der Hosts, die mit der Weiterleitungsentität verbunden sind, zu erzeugen.

## Revendications

1. Méthode de production d'une table d'acheminement, comprenant :
une unité de commande produisant des entrées de réacheminement, et établissant les entrées de réacheminement présentant un attribut d'association dans le même groupe d'entrées de réacheminement connexe ;
**caractérisée en ce que**
lorsqu'une unité d'acheminement consulte des entrées de réacheminement, des entrées de réacheminement correspondantes ayant été trouvées, l'unité de commande établit en outre si les entrées de réacheminement trouvées appartiennent à un groupe d'entrées de réacheminement connexe : si oui, l'unité de commande transmet à l'unité d'acheminement consultant les entrées de réacheminement toutes les entrées de réacheminement dans le groupe d'entrées de réacheminement connexe auquel appartiennent les entrées de réacheminement trouvées ;
l'établissement des entrées de réacheminement, présentant un attribut d'association, dans le même groupe d'entrées de réacheminement connexe comprenant :
l'établissement, par l'unité de commande, des entrées d'acheminement d'hôtes appartenant à la même grappe de serveurs dans le même groupe d'entrées de réacheminement connexe , ou des entrées d'acheminement d'hôtes assurant la prestation de services connexes dans le même groupe d'entrées de réacheminement connexe.

2. Méthode selon la revendication 1, comprenant en outre :
l'allocation, par l'unité de commande, après l'établissement des entrées de réacheminement, présentant un attribut d'association, dans le même groupe d'entrées de réacheminement connexe, d'une identité de groupe de corrélation au groupe d'entrées de réacheminement connexe, en établissant une identité de groupe de corrélation correspondant à des entrées d'acheminement n'appartenant pas au groupe d'entrées de réacheminement connexe comme étant nulles ou n'établissant pas une identité de groupe de corrélation pour les entrées de réacheminement n'appartenant pas au groupe d'entrées de réacheminement connexe ; et
la détermination, par l'unité de commande, si les entrées de réacheminement trouvées appartiennent à un groupe d'entrées de réacheminement connexe, comporte : établir si l'identité du groupe de corrélation correspondant aux entrées de réacheminement trouvées est nulle, ou s'il n'y a pas d'identité du groupe de corrélation, et dans ce dernier cas, déterminer si les entrées de réacheminement trouvées appartiennent à un groupe d'entrées de réacheminement connexe.

3. Méthode selon la revendication 1, la génération, par l'unité de commande, d'entrées de réacheminement comportant :
la réception, par l'unité de commande, d'une adresse pour l'unité d'acheminement et des adresses d'hôtes connectés à l'unité de réacheminement, transmises par l'unité de réacheminement connectée à celle-ci, et la production d'entrées de réacheminement des hôtes avec les adresses de l'unité d'acheminement et les adresses des hôtes connectés à l'unité d'acheminement.

4. Méthode selon la revendication 1, la consultation, par l'unité de réacheminement, des entrées de réacheminement comporte :
lors de la réception d'un message de données ou du titre d'un message de données, la détermination, par l'unité de commande, que l'unité de réacheminement consultant des entrées de réacheminement correspond à une adresse de destination du message de données.

5. Méthode selon la revendication 1, comprenant en outre :
lorsque l'on estime que les entrées de réacheminement trouvées n'appartiennent par à un groupe d'entrées de réacheminement connexe, la transmission, par l'unité de commande, des entrées de réacheminement trouvées à l'unité de réacheminement consultant les entrées de réacheminement.

6. Appareil de production d'une table d'acheminement, comprenant :
une unité de production d'entrées,
une unité d'établissement de groupe, et
une unité de consultation,
dans lequel
l'unité de production d'entrées est configurée pour produire des entrées de réacheminement ;
l'unité d'établissement de groupe est configurée pour établir les entrées de réacheminement possédant un attribut d'association dans le même groupe d'entrées de réacheminement connexe ;
**caractérisé en ce que**
lorsqu'une unité d'acheminement consulte des entrées de réacheminement, des entrées de réacheminement correspondantes ayant été trouvées, l'unité de consultation est configurée pour établir, en outre, si les entrées de réacheminement trouvées appartiennent à un groupe d'entrées de réacheminement connexe, et, si oui, transmettre à l'unité de réacheminement consultant les entrées de réacheminement toutes les entrées de réacheminement dans le groupe d'entrées de réacheminement connexe auquel appartiennent les entrées de réacheminement trouvées ;
l'unité d'établissement de groupe étant configurée pour placer les entrées de réacheminement d'hôtes appartenant à la même grappe de serveurs dans le même groupe d'entrées de réacheminement connexe, ou placer les entrées de réacheminement d'hôtes assurant la prestation de services connexes dans le même groupe d'entrées de réacheminement connexe.

7. Appareil selon la revendication 6, dans lequel
l'unité d'établissement de groupe est configurée en outre, après avoir placé les entrées de réacheminement présentant un attribut d'association dans le même groupe d'entrées de réacheminement connexe, pour allouer une identité de groupe de corrélation au groupe d'entrées de réacheminement connexe, et établir une identité de groupe de corrélation correspondant à des entrées de réacheminement n'appartenant pas au groupe d'entrées de réacheminement connexe comme étant nulles ou non placées dans une identité de groupe de corrélation pour les entrées de réacheminement n'appartenant pas au groupe d'entrées de réacheminement connexe ; et
l'unité de consultation est configurée pour juger si l'identité de groupe de corrélation correspondant aux entrées de réacheminement trouvées est nulle, ou s'il n'y a pas d'identité de groupe de corrélation, et, dans ce dernier cas, pour établir si les entrées de réacheminement trouvées appartiennent à un groupe d'entrées de réacheminement connexe.

8. Appareil selon la revendication 6, dans lequel
l'unité de production d'entrées est configurée pour recevoir une adresse de l'unité de réacheminement, et des adresses d'hôtes connectés à l'unité de réacheminement qui sont transmises par l'unité de réacheminement connectée à celle-ci, et produire des entrées de réacheminement des hôtes, avec l'adresse de l'unité de réacheminement et les adresses des hôtes connectés à l'unité de réacheminement.
